# EUROPÄISCHE PATENTSCHRIFT

(11) **EP 0 852 962 B1**
(45) Veröffentlichungstag und Bekanntmachung des Hinweises auf die Patenterteilung: **17.10.2001**
(21) Anmeldenummer: 97122718.6
(22) Anmeldetag: 23.12.1997
(51) Int. Cl.: B01D 25/12

(54) **Filterplatte**
Filter plate
Plaque de filtration

(30) Priorität: 14.01.1997 DE 19700901
(43) Veröffentlichungstag der Anmeldung: 15.07.1998
(73) Patentinhaber: Erich Netzsch GmbH & Co. Holding KG, D-95100 Selb (DE)
(72) Erfinder: Artner, Stephan, 01189 Dresden (DE); Denkinger, Franz, 95145 Oberkotzau (DE)

(56) Entgegenhaltungen:
- DE-C- 99 530
- DE-C- 249 719
- FR-A- 330 147
- FR-A- 2 586 360
- FR-E- 57 675
- GB-A- 645 586

## Beschreibung

Die Erfindung betrifft eine Filterplatte, von der im Oberbegriff der Ansprüche 1 und 9 genannten Art.

Eine Filterplatte dieser Art ist aus der Zeitschrift F&S Filtrieren & Separieren, Jahrgang 8/1994, Heft 6 bekannt. Auf der entsprechenden Abbildung sind zwei Filterplatten dargestellt. Die linke Filterplatte besitzt einen Eckeinlauf, für die in der Fettchemie zu behandelnden Fette und Öle. Diese linke Filterplatte, die im Betriebsfall ein Filtertuch trägt, arbeitet in Verbindung mit der rechts dargestellten Filterplatte mit einer Membrane, einer sogenannten Membranfilterplatte. Die Membranfilterplatte dient dabei zur Nachverdichtung der unter dem Druck der Förderpumpe vorfiltrierten Medien. Aufgrund der besonderen Eigenschaften der Medien muß der Einlauf zur zuverlässigen Füllung der Kammer mit einem großen Querschnitt versehen sein. Dadurch reicht der Einlaß jedoch in die filterwirksame Filterplattenoberfläche und wird von der Membrane der Membranfilterplatte bedeckt, die man beim Nachpreßvorgang mit bis zu 30 bar beaufschlagt. Um zu verhindern, daß die Membrane im Einlaßbereich z.B. durch Überdehnung beschädigt wird, hat man ein Stützelement in den Einlaß eingesetzt. Dieses, aus einzelnen Fingern bestehende Stützelement, stützt die länglichen Noppen und damit die Membran ab. Beim Füllvorgang bleibt zwischen den Fingern genügend Querschnitt für die Befüllung.

Diese Einlaufgestaltung hat jedoch den Nachteil, daß sich während des Nachpressens Masseverdichtungen zwischen den Fingern festsetzen, die die erneute gleichmäßige Befüllung der Filterkammer negativ beeinflussen, wodurch Membranschäden hervorgerufen werden können.

Aus der DE PS 99 530 geht eine Abdichtung für Filtertücher in Filterpressen hervor. Diese Abdichtung besteht aus ringförmigen Elementen, die durch Stege voneinander beabstandet sind. Durch die Öffnungen zwischen den Stegen gelangt die zu filtrierende Schlammasse vom Einlauf in die Filterkammer. Die Stege übernehmen in diesem Fall nur mittelbar eine Abstützfunktion, keineswegs jedoch für eine Membran, sondern für die beiden Scheiben, die die Filtertücher am Einlauf für die Trübe fixieren und damit abdichten.

Aus der FR 2 586 360 A1 geht eine Filterpresse hervor, bei der zwischen den einzelnen Filterplatten Nachpreßelemente vorgesehen sind. Die Zuführung der Trübe in die einzelnen Filterkammern geschieht über mehrere Zuführungskanäle. Von diesen am Filterplattenrand verlaufenden, zur Längsachse der Filterplatte gerichteten Kanälen, zweigen sich jeweils 2 geneigte Kanäle ab, die schräg in den Filtrationsraum führen. Die schräg verlaufenden Kanäle sind von Beschickungsrosten abgedeckt. Der Zulauf der Trübe von den schrägen Zulaufkanälen in die Filterkammer geschieht über zylindrische Durchlässe.

Der Erfindung liegt die Aufgabe zugrunde, eine Filterplatte so zu gestalten, daß die Kammerfüllung auch beim Einsatz von besonderen Medien schnell und gleichmäßig verläuft.

Die Lösung der Aufgabe ist mit den Merkmalen des Anspruchs 1 ebenso wie mit den Merkmalen des Anspruchs 9 möglich. Vorteilhafte Weiterentwicklungen gehen aus den Unteransprüchen hervor.

Durch die erfindungsgemäße Gestaltung des Trübezulaufs der Filterplatte werden die zwischen oder unter dem Stützelement durch den Nachpreßvorgang erzeugten Masseverdichtungen automatisch beim nächsten Füllvorgang beseitigt. Dazu reicht der Druck, der von der Förderpumpe erzeugt wird, aus. Die in Strömungsrichtung eingerichtete Erweiterung des Zuleitungsteils und der Quersteg bzw. der Strömungskeil unterstützen die Abförderung der Produktverdichtungen. Durch die besondere Gestaltung der Abstützung in Form der Stege, in der Anordnung der Stege, oder durch die Verwendung einer Abdeckplatte kann der Gestaltung der Membrane in bezug auf deren Nocken Rechnung getragen werden. Bei entsprechender Steggestaltung läßt sich der Einlaß bis in einen Bereich innerhalb der wirksamen Filtrationsoberfläche führen, in der bei geschlossenem Filterplattenpaket bereits eine große Kammerbreite gegeben ist.

In einer besonderen Ausgestaltung ist der Trübezulauf als separates Teil gefertigt. Das bedeutet, daß alle Platten nur mit einem einheitlichen Durchlaß versehen sein müssen, die spezifische Gestaltung des Trübezulaufs kann speziell zum zu verarbeitenden Medium gewählt werden. Die Fertigung des Einsatzes des Trübezulaufs geschieht demnach unabhängig vom Gießvorgang der Filterplatte. Die Befestigung des separaten Teils geschieht von Klemmteilen, die gleichzeitig die Filtertücher festhalten.

Ausführungsformen der Erfindung werden anhand der Zeichnungen näher erläutert. Es zeigt:
- Figur 1: einen Trübezulauf mit angedeuteter Membranüberdeckung,
- Figur 2: einen Trübezulauf mit Stegunterstützung,
- Figur 3: einen Trübeeinlaß mit unterschiedlichen Stegformen,
- Figur 4: einen Teilschnitt eines Trübeeinlasses mit angrenzenden Membranfilterplatten,
- Figur 5: einen Teilschnitt eines Trübeeinlasses mit einer Abdeckplatte,
- Figur 6: eine Abdeckplatte nach Figur 5,
- Figur 7: einen Teilbereich des Endes des Strömungskanals der Ausführung der Erfindung mit Abdeckplatte

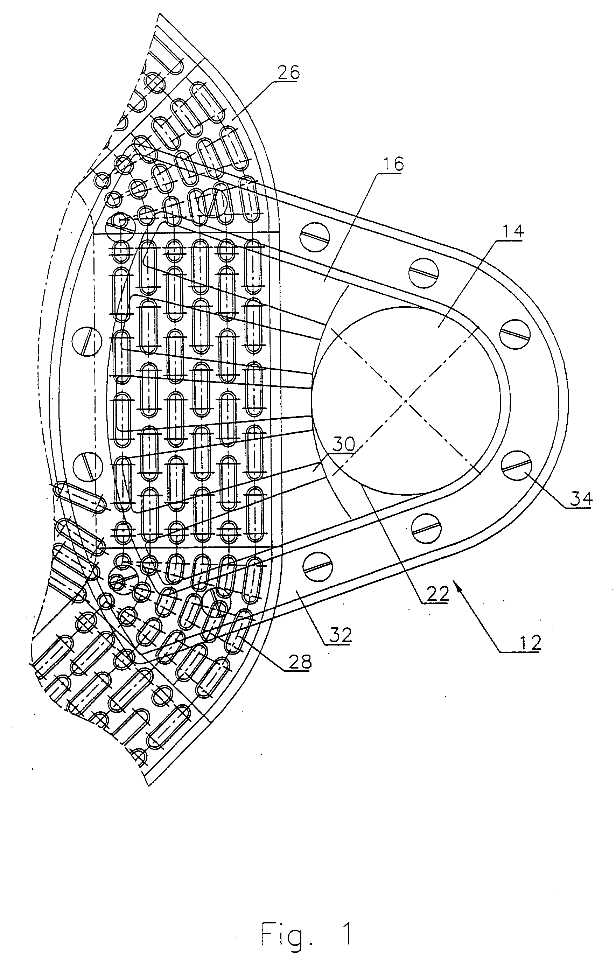

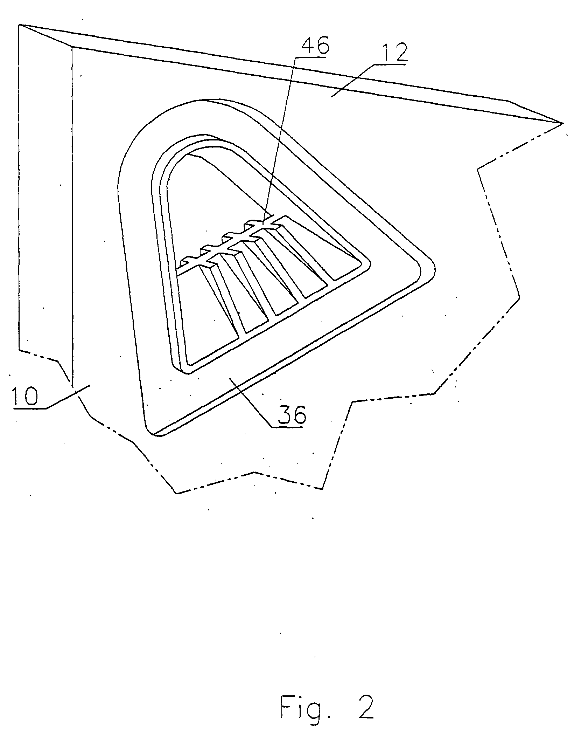

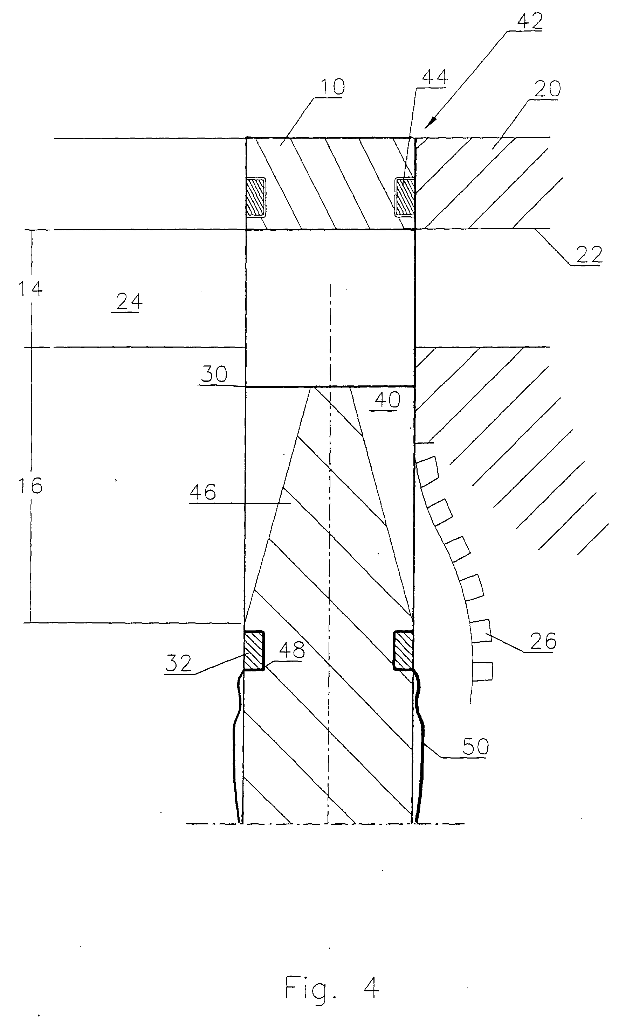

Figur 1 und Figur 2 zeigen den Ausschnitt einer Filterplatte (10) im Eckbereich. In diesem Eckbereich der Filterplatte ist der Trübeeinlauf (12) angeordnet, der sich wirkungsmäßig aus einem Zuleitungsteil (14) und einem Einlaßteil (16) zusammensetzt, das sich zum Filterplattenzentrum hin erweitert. Unter Zuleitungsteil ist der Teil zu verstehen, den die Filterplatte (10) und die Membranplatten (20) (siehe Figur 4) in geschlossenem Zustand einer Filterpresse bilden.Hierbei ergeben die einzelnen Durchlässe (22) insgeseamt einen Kanal (24), der sich über das gesamte Filterplattenpaket erstreckt. Der Einlaßteil (16) des Trübezulaufs (12) führt bis in den Bereich, in dem die Membrane (26) der Membranplatte (20) befestigt ist. Die länglichen Noppen (28) der Membrane (26) stützen sich hierbei größtenteils auf den fächerförmig angeordneten Stegen (30) ab, die zum Einlaßteil (16) gehören. Nachdem der Einlaßteil (16) bis in die aktive Filteroberfläche hineinreicht, wird der Trübeeinlauf (12) zu einem Teil vom Filtertuch umgeben. Befestigt wird das Filtertuch im Bereich der Trübezufuhr an der Filterplatte durch den Klemmring (32) mit seinen Schrauben (34). Sollte der Trübezulauf (12) als separates Teil gefertigt werden, so könnte er entsprechend Figur 2 gestaltet sein, wobei der verstärkte Rand (36) vorder- und rückseitig jeweils durch einen Klemmring (32) mit der Filterplatte verspannt ist. Die Klemmringe (32) stützen sich dabei an den stufenartigen Vertiefungen an beiden Seiten der Filterplatte ab.

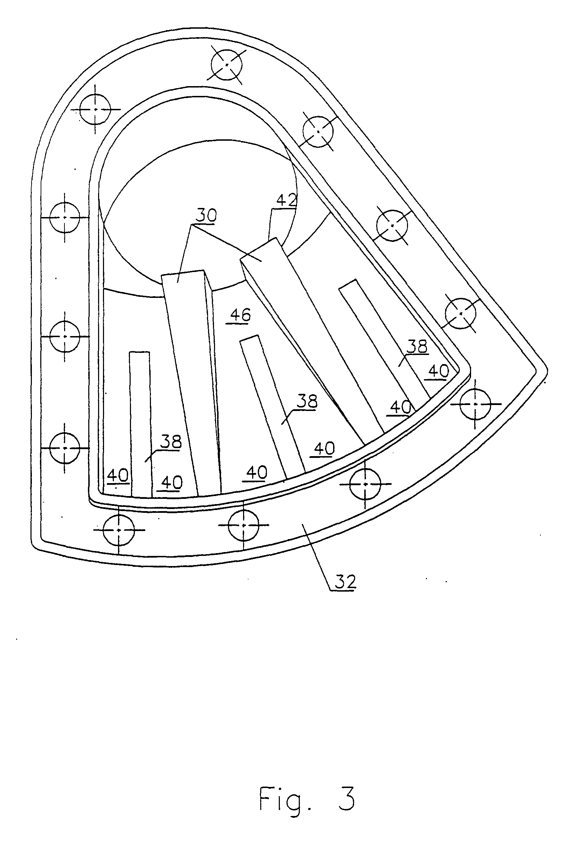

Eine mögliche Gestaltung des Trübezulaufs, insbesondere der Gestaltung der Stege, zeigt Figur 3. Hier sind zwei innere und in der Draufsicht konische Stege (30) mit schmalen, kurzen Stegen (38) kombiniert. Diese Anordnung und Gestaltung kann notwendig sein, wenn eine speziell geformte Membrane zum Einsatz kommt, die eine bestimmte Noppenform aufweist. Aufgrund der konisch in Strömungsrichtung der Trübe sich erweiternden Zulaufkanäle (40) löst sich das durch die Membrane nachverdichtete Material beim nächsten Filter- bzw. Füllzyklus automatisch. Materialansammlungen an den Stirnflächen (42) transportiert der Pumpenstrom in axialer Richtung entlang der Längsachse des Filterplattenpaketes ab.

In Figur 4 liegt links an der Filterplatte (10) eine Membranplatte (20) an. Membranplatte (20) und Filterplatte (10) sind im Dichtrandbereich (42) mit Dichtungsringen versehen, die den Auslauf des Filtrates verhindern. Die Stege (30) sind auf den Quersteg (46) aufgesetzt. Der Quersteg (46) ist als Keil ausgebildet, der im Übergangsbereich zwischen Zuleitungsteil (14) und Einlaßteil (16) seine geringste Höhe aufweist. Der Quersteg selbst und seine keilförmige Gestaltung sind ausschlaggebend dafür, daß trotz der Abstützung der Membrane (26) am Steg (30) und der damit entstehenden Materialverdichtungen keine Störungen beim nächsten Füllvorgang auftreten. Die Nut (48), für den das Filtertuch (50) haltenden Klemmring (32), beginnt erst mit einem kurzen Abstand zu den Keilen, damit keine Stauflächen entstehen.

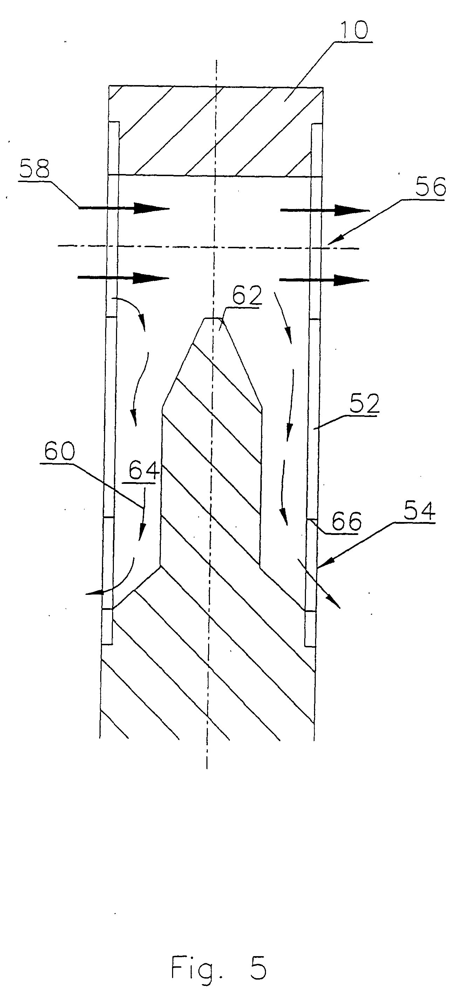

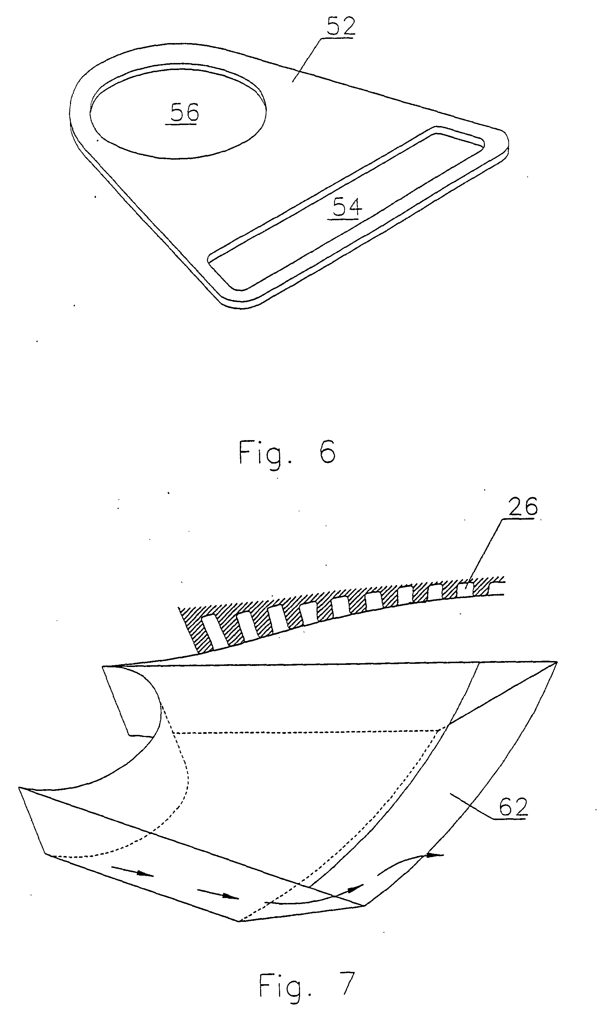

Gemäß Figur 5 und 6 besteht das Stützelement für die Membrane nicht aus Stegen, sondern aus einer Abdeckplatte (52) mit je einer Zulauföffnung (54) und einer Versorgungsöffnung (56). Die Zulauföffnung (54) steht mit der jejeweiligen Filterkammer, und die Versorgungsöffnung (56) mit dem Zulauf aller weiteren Filter- und Membranplatten in Verbindung. Beim Füllen der Filterkammern entstehen zwei wesentliche Strömungskomponenten der Trübe, eine horizontale Komponente, dargestellt mit dicken Strömungspfeilen (58), und mehrere vertikale Teilkomponenten, dargestellt mit dünnen Strömungspfeilen (60). Ein in diesem Beispiel an die Filterplatte angegossener Strömungskeil (62) teilt den Hauptstrom in Teilströme auf. Die Form des Strömungskeils (62) ist so gewählt, daß sich der Querschnitt des Strömungskanals (64) in Strömungsrichtung der Trübe erweitert. Mindestens im Endbereich vor der Filterkammer muß dies eingehalten sein, um die verpreßten Rückstände des Materials mit der nächsten Charge ohne Zuhilfe entfernen zu können.

In Figur 7 ist eine Ausgestaltung des Kanals (64) im Bereich der Zulauföffnung (54) dargestellt. Um die Zulauföffnung (54) nicht zu groß werden zu lassen, da sich damit die Abstützfläche für die Membrane reduziert, ist der Kanal in diesem Bereich mit einem Radius versehen, der das Abgleiten der verpreßten Rückstände in die Filterkammer erleichtert. Als Kreismittelpunkt für den Radius wird die vordere Innenkante (66) der Zulauföffnung (54) verwendet.

## Patentansprüche

1. Filterplatte mit mindestens einem exzentrisch angeordneten Trübezulauf (12), der aus einem im Dichtrandbereich befindlichen freien Zuleitungsteil (14) und einem in die wirksame Filterplattenoberfläche der Filterplatte hineinragenden Einlaßteil (16) besteht, das ein Stützelement für die Membrane aufweist,
**dadurch gekennzeichnet,**
**daß** sich der Querschnitt des Einlaßteils (16) vom Zuleitungsteil (14) in Richtung Filterplattenzentrum erweitert und die stehenden Stege (30, 38) des Stützelements auf einem als Keil ausgebildeten Quersteg (46) aufgesetzt sind.

2. Filterplatte nach Anspruch 1,
**dadurch gekennzeichnet,**
**daß** die Stege (30,38) fächerförmig angeordnet sind, so daß die Zulaufkanäle (40) konisch in Richtung Filterplattenzentrum erweitert sind.

3. Filterplatte nach Anspruch 1 oder 2,
**dadurch gekennzeichnet,**
**daß** der Quersteg (46) als Keil ausgebildet ist, der im Bereich des Zuleitungsteils (14) seine geringste Höhe aufweist.

4. Filterplatte nach einem der Ansprüche 1 bis 3,
**dadurch gekennzeichnet,**
**daß** der Umfang des Trübezulaufs (12) mit einem Klemmring (32) für das Filtertuch (50) versehen ist.

5. Filterplatte nach einem der Ansprüche 1 bis 4,
**dadurch gekennzeichnet,**
**daß** die Stege (30) konisch ausgebildet sind, wobei die Konizität in Strömungsrichtung der Trübe abnimmt.

6. Filterplatte nach einem der Ansprüche 1 bis 5,
**dadurch gekennzeichnet,**
**daß** zwischen Stegen (30) mit konischem Querschnitt, Stege (38) mit längsparallelen Seitenflächen angeordnet sind.

7. Filterplatte nach einem der Ansprüche 1 bis 3,
**dadurch gekennzeichnet**,
däß die Dicke des Querstegs (46) im Bereich des Klemmrings (32) der Dicke der Filterplatte (10) entspricht.

8. Filterplatte nach einem der vorhergehenden Ansprüche,
**dadurch gekennzeichnet,**
**daß** das Zuleitungsteil (14) und das Einlaßteil (16) ein separates Teil bilden, das in die Filterplatte einsetzbar ist.

9. Filterplatte mit mindestens einem exzentrisch angeordneten Trübezulauf (12), der aus einem im Dichtrandbereich befindlichen freien Zuleitungsteil (14) und einem in die filterwirksame Filterplattenoberfläche der Filterplatte hineinragenden Einlaßteil (16) besteht, das ein Stützelement für die Membrane aufweist,
**dadurch gekennzeichnet,**
**daß** das Stützelement eine Abdeckplatte (52) mit einer Versorgungsöffnung (56) und einer Zulauföffnung (54) ist, die den Einlaßteil (16) des Trübezulaufs bedeckt, dessen Breite sich in Strömungsrichtung erweitert, wobei an die Filterplatte im Bereich unter der Abdeckplatte (52) ein Strömungsteil (62) angefügt ist.

10. Filterplatte nach Anspruch 9,
**dadurch gekennzeichnet,**
**daß** sich der Strömungskeil (62) zur Versorgungsöffnung (56) hin verjüngt.

## Claims

1. Filter plate comprising at least one eccentrically disposed pulp inlet (12) consisting of a free feeder section (14) provided in the region of the sealing edge and an inlet section (16) projecting into the effective filter plate surface of the filter plate,
**characterised in**
**that** the cross-sectional area of said inlet section (16) flares from said feeder section (14) in a direction towards the centre of the filter plate, and that the upright webs (30, 38) of the supporting element are mounted on a transverse web (46) configured as a wedge.

2. Filter plate according to Claim 1,
**characterised in**
**that** said webs (30, 38) are disposed in a fan-shaped arrangement so that said feeder ducts (40) will conically flare in a direction towards the centre of the filter plate.

3. Filter plate according to Claim 1 or 2,
**characterised in**
**that** said transverse web (46) is configured as a wedge presenting its smallest height in the region of said feeder section (14).

4. Filter plate according to any of the Claims 1 to 3,
**characterised in**
**that** the periphery of said pulp inlet (12) is provided with a clamping ring (32) for the filter cloth (50).

5. Filter plate according to any of the Claims 1 to 4,
**characterised in**
**that** said webs (30) present a conical configuration, with the conicality decreasing in the flow direction of the pulp.

6. Filter plate according to any of the Claims 1 to 5,
**characterised in**
**that** webs (38) with lateral areas parallel in the longitudinal direction are disposed betwsen webs (30) having a conical cross-sectional area.

7. Filter plate according to any of the Claims 1 to 3,
**characterised in**
**that** the thickness of said transverse web (46) in the region of said clamping ring (32) corresponds to the thickness of the filter plate (10).

8. Filter plate according to any of the preceding Claims,
**characterised in**
**that** said feeder section (14) and said inlet section (16) constitute a separate element adapted to be inserted into the filter plate.

9. Filter plate with at least one eccentrically disposed pulp inlet (12) consisting of a free feeder section (14) provided in the region of the sealing edge and an inlet section (16) projecting into the effective filter plate surface of the filter plate, which presents a supporting element for the membrane,
**characterised in**
**that** said supporting element is a cover plate (52) with a supply opening (56) and an inlet opening (54) covering the inlet section (16) of the pulp inlet, whose width flares in the flow direction, with a flow element (62) being attached to the filter plate in the region under said cover plate (52).

10. Filter plate according to Claim 8,
**characterised in**
**that** said flow wedge (62) tapers towards said supply opening (56).

## Revendications

1. Plaque de filtre comprenant au moins une entrée du milieu dense (12), disposé de façon excentrique, qui consiste en une partie d'alimentation (14) libre, prévue dans la région du bord d'étanchéité, et en une partie d'entrée (16), qui s'étend dans la surface de filtrage effectif de la plaque de filtre,
**caractérisée en ce**
**que** la section de ladite partie d'entrée (16) s'élargit à partir de ladite partie d'alimentation (14) en un sens vers le centre de la plaque de filtre, et **en ce que** les entretoises (30, 38) en debout de l'élément de support sont montées sur une entretoise transversale (46) à configuration cunéiforme.

2. Plaque de filtre selon la revendication 1,
**caractérisée en ce**
**que** lesdites entretoises (30, 38) sont disposées en un arrangement en éventail, de façon que lesdits passages d'alimentation (40) s'élargissent sous forme conique en un sens vers le centre de la plaque de filtre.

3. Plaque de filtre selon la revendication 1 ou 2,
**caractérisée en ce**
**que** ladite entretoise transversale (46) a une configuration cunéiforme et a sa plus petite hauteur dans la zone de ladite partie d'alimentation (14).

4. Plaque de filtre selon une quelconque des revendications 1 à 3,
**caractérisée en ce**
**que** la périphérie de ladite entrée du milieu dense (12) est pourvue d'une bague de serrage (32) à serrer le tissu filtrant (50).

5. Plaque de filtre selon une quelconque des revendications 1 à 4,
**caractérisée en ce**
**que** lesdites entretoises (30) ont une configuration conique, à la conicité décroissant en sens d'écoulement du milieu dense.

6. Plaque de filtre selon une quelconque des revendications 1 à 5,
**caractérisée en ce**
**que** des entretoises (38) aux surfaces latérales en parallèle en sens longitudinal sont disposées entre des entretoises (30) à une section conique.

7. Plaque de filtre selon une quelconque des revendications 1 à 3,
**caractérisée en ce**
**que** l'épaisseur de ladite entretoise transversale (46) dans la zone de ladite bague de serrage (32) correspond à l'épaisseur de la plaque de filtre (10).

8. Plaque de filtre selon une quelconque des revendications précédentes,
**caractérisée en ce**
**que** ladite partie d'alimentation (14) et ladite partie d'entrée (16) constituent un élément séparé apte à être inséré dans la plaque de filtre.

9. Plaque de filtre comprenant au moins une entrée du milieu dense (12), disposé de façon excentrique, qui consiste en une partie d'alimentation (14) libre, prévue dans la région du bord d'étanchéité, et en une partie d'entrée (16), qui s'étend dans la surface de filtrage effectif de la plaque de, qui présente un élément de support pour la membrane,
**caractérisée en ce**
**que** ledit élément de support est une plaque de couverture (52) à une ouverture d'alimentation (56) et une ouverture d'entrée (54), qui couvre la partie d'entrée (16) de l'entrée du milieu dense, dont la largeur s'élargit en sens d'écoulement, à un élément d'écoulement (62) étant rattaché à la plaque de filtre dans la zone au-dessous de ladite plaque de couverture (52).

10. Plaque de filtre selon la revendication 8,
**caractérisée en ce**
**que** ledit coin d'écoulement (62) se réduit en cône vers ladite ouverture d'alimentation (56).
